# EUROPEAN PATENT APPLICATION

(11) **EP 4 815 250 A1**
(43) Date of publication of application: **30.09.2026**
(21) Application number: 25305439.9
(22) Date of filing: 26.03.2025
(51) Int. Cl.: H02J 7/00

(54) **PROTECTION SYSTEM OF BATTERIES ONBOARD OF VEHICLES, AND VEHICLE COMPRISING SUCH PROTECTION SYSTEM**

(71) Applicant: ALSTOM Transport SA, 93400 St-Ouen sur Seine (FR)
(72) Inventor: ABOUJDID, Eric, 65420 IBOS (FR)
(74) Representative: Plasseraud IP

(57) **Abstract**

Protection system (100) for a battery pack (1) which comprises one or more battery cells (1A) and is suitable to be mounted along a power circuit (102) onboard a vehicle, comprising:
- a first protection unit which comprises or is constituted by a battery management system (2) that monitors the voltage of each of the battery cells and causes the disconnection of the battery pack if the voltage output of one cell exceeds at least one predefined cell voltage threshold;
- a second protection unit comprising or constituted by a battery charger (3) that monitors the voltage at the output of the battery pack and disconnects the battery pack if the monitored output voltage exceeds at least one predefined output voltage threshold defined for the battery pack;
- a third protection unit which comprises a controller (11) and a sensor (12) which provides the controller (11) with signals indicative of the voltage at the output of the battery pack, the controller disconnecting the battery pack from the battery charger if the monitored output voltage exceeds said predefined output voltage threshold.

## Description

The present invention concerns a protection system of batteries onboard of vehicles, and a vehicle comprising such a protection system.

The protection system according to the present invention is particularly suitable for the protection of high-voltage lithium-ion batteries used onboard of public transportation vehicles, especially in the railway sector, and will be described hereinafter by making reference to such application, without intending in anyway to limit its possible application to other types of batteries and/or of public transportation vehicles.

As known, in the railway transportation sector, high voltage lithium-ion batteries are used onboard vehicles for auxiliary and traction applications.

Such batteries have to respect strict safety standards; indeed, electrical or thermal abuses (e.g. over voltage or over temperature conditions) of these batteries may lead to very dangerous situations.

In particular, fires, explosions, asphyxia, can be catastrophic for passengers and staff according to Railway Safety Standard EN 50126, and a catastrophic scenario failure rate shall be demonstrated to be lower than 1x10⁻⁹ failure per hour (fph), to be considered highly improbable and therefore tolerable according to the commission implementing regulation (UE) No 402/2013 "Common Safety Method".

To this end, suppliers deliver nowadays battery packs containing cell modules and a Battery Management System (BMS) which integrates cells voltage and temperature protections with a failure rate lower than 1x10⁻⁶ fph and a Safety Integrity Level 2 (SIL2, according to the standard EN 50126).

To reach the target of 1x10⁻⁹ fph at system level, the standard solution foresees the development of a battery charger with safety protections SIL2 for battery charge monitoring; such battery charger stop charging or discharging operations if a voltage limit is exceeded.

This solution requires an independent safety assessment (ISA) of the software and electronics used for the safety barrier constituted by the SIL2 battery charger, with additional costs, delays, and maintainability issues, such as recurrent costs for ISA at each modification.

The present invention is aimed at facing such issues, and in particular at providing a system that, as a whole, is capable of efficiently protecting batteries onboard public transportation vehicles with a simpler architecture compared with known solutions, while meeting the highest safety standards and achieving an acceptable level of hazard tolerable rate.

This aim is achieved by a protection system protection system for protecting at least one battery pack which comprises one or more battery cells and is suitable to be mounted along a power circuit onboard a vehicle, the protection system comprising at least:
- a first protection unit which comprises or is constituted by a battery management system, BMS, which is part of or is associated to the battery pack, the BMS being configured to monitor at least the voltage of each of the one or more battery cells and to cause the battery pack to be disconnected if the voltage output of at least one cell exceeds at least one predefined cell voltage threshold defined for each of the one or more cells;
- a second protection unit which comprises or is constituted by a battery charger which is suitable to be connected to the battery pack and charge said one or more battery cells, wherein said battery charger is configured to monitor the voltage at the output of the battery pack and to disconnect at least the battery pack if the monitored output voltage of the battery pack exceeds at least one predefined output voltage threshold defined for the battery pack;
- a third protection unit which comprises at least a controller and a sensor which is adapted to provide the controller with signals indicative of the voltage at the output of the battery pack, wherein the controller is configured to disconnect the battery pack from the battery charger if the monitored output voltage of the battery pack exceeds said at least one predefined output voltage threshold defined for the battery pack.

Preferred embodiments of the invention are specified in the dependent claims, the contents of which are to be understood as an integral part of this description.

This aim is also achieved by a vehicle according to claim 10.

In particular, the vehicle is a railway vehicle.

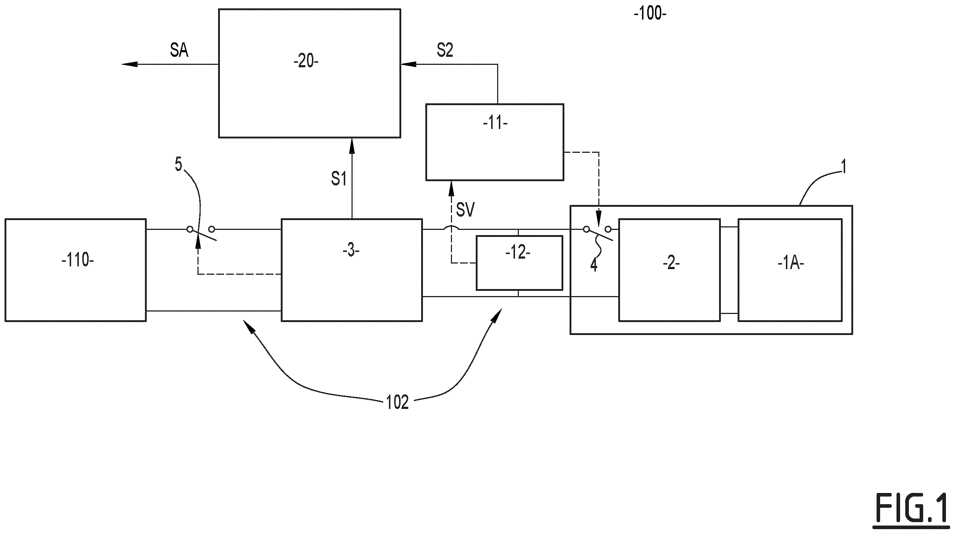

Further characteristics and advantages will become apparent from the description of some preferred but not exclusive exemplary embodiments of a protection system according to the present disclosure, illustrated only by way of non-limitative examples with the accompanying Figure 1 that is a block diagram schematically illustrating a protection system for protecting a battery pack onboard of a vehicle.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

Figure 1 schematically illustrates a protection system, indicated by the overall reference number 100, for protecting at least one battery pack 1 installed onboard a vehicle, for instance a railway vehicle.

The battery pack 1 is suitable to supply onboard auxiliary loads and/or to provide traction power, and comprises, according to solutions well known in the art or in any case readily available in the art and therefore not described herein in details, one or more battery cells 1A.

The battery pack is installed along a power circuit, schematically indicated in figure 1 by the reference number 102.

Clearly, onboard the vehicle there could be installed more battery packs 1, and what below described in connection with the battery pack 1 may be applied to each battery pack.

The protection system 100 according to the present invention comprises at least three distinct protection units that can operate independently from each other.

In particular, a first protection unit comprises or is constituted by a battery management system (BMS) 2, which is part of or in any case is operatively associated to the battery pack 1.

Usefully, the battery management system 2 is configured to monitor at least the voltage of each of the one or more battery cells 1A and to cause the battery pack 1 to be disconnected from the power circuit 102 if the voltage of at least one cell 1A exceeds at least one predefined cell voltage threshold defined for each of the one or more cells.

For example, if there is used a pack of one hundred cells connected in series, a cell threshold voltage for each cell can be for instance about 4V; if the voltage monitored at one of the cells exceeds such value, then the battery management system 2 intervenes and causes the disconnection of the battery pack 1.

The battery management system 2 can be configured to provide also other protections, such as temperature protections.

The battery management system 2 can be of any type already available on the market and suitable to provide a Safety Integrity Level 2 (SIL2).

The power system 100 according to the invention comprises also a second protection unit that comprises or is constituted by a battery charger 3 which is suitable to be connected to the battery pack 1 and to charge the one or more battery cells 1A.

In particular, the battery charger 3 is configured to monitor the voltage at the output of at least the battery pack 1 from the power circuit 102 and to cause the electrical disconnection of the battery pack 1 if the monitored output voltage exceeds at least one predefined overall output voltage threshold defined for the battery pack 1.

The value of the overall output voltage threshold defined for the battery pack 1 can be set for example based on the number of cells used.

In the exemplary embodiment schematically illustrated in figure 1, the battery charger 3 is for example installed along the power circuit 102 between the battery pack 1 and one or more loads, schematically represented by the reference number 110.

The one or more loads 110 can be for example one or more onboard auxiliary loads, a traction bus, etc.

Usefully, the power system 100 according to the invention comprises also a third protection unit which is configured to monitor, independently from the second protection unit, and in particular from the battery charger 3, the voltage at the output of the battery pack 1 and to cause the electrical disconnection of the battery pack 1 if the monitored output voltage exceeds said predefined overall output voltage threshold defined for the battery pack 1.

As illustrated, the third protection unit comprises at least a controller 11 and a sensor 12, for example a voltage sensor.

The sensor 12 is adapted to provide the controller 11 with signals SV indicative of the voltage at the output of the battery pack 1, and the controller 11 is configured to electrically disconnect the battery pack 1 from the battery charger 3 if the monitored output voltage exceeds said predefined overall output voltage threshold defined for the battery pack 1.

In one possible embodiment, the controller 11 is configured to disconnect the battery pack 1 from the power circuit 102, and in particular from the battery charger 3, if the voltage monitored at the output of the battery pack 1 is below a first output voltage threshold defined for the battery pack 1 or is above a second output voltage threshold defined for the battery pack 1 higher than said first output voltage threshold.

In one possible embodiment, the battery charger 3 is configured to disconnect the battery pack 1 from the power circuit 102 if the output voltage monitored at the output of the battery pack 1 is below said first output voltage threshold defined for the battery pack 1 or is above said second output voltage threshold defined for the battery pack 1 higher than said first output voltage threshold.

The first output voltage threshold represents a lower voltage limit indicative of an undervoltage condition for the whole battery pack 1, and the second output voltage threshold represents an upper voltage limit indicative of an overvoltage condition for the whole battery pack 1.

Conveniently, the use of both the controller 11 and the battery charger 3 monitoring at the same time and independently from each other the voltage at the output of the battery pack 1, allows utilizing a simpler battery charger 3 capable of providing a basic integrity level of safety.

Hence, the battery charger 3 can be of any type available on the market if capable of providing such a basic level of safety.

The output voltage monitored by the battery charger 3 can be carried out by the intrinsic structure of the battery charger 3 or by using a dedicated voltage sensor.

Usefully, the controller 11 can be constituted by an electronic control unit already present on board the vehicle, and which can be suitably programmed to perform, in addition to the functionalities/tasks regularly performed for such vehicle, also the functionalities/tasks foreseen for it in the protection system 100.

In one possible embodiment, the battery management system 2 is configured to disconnect the battery pack 1 from the power circuit 102, and in particular from the battery charger 3, if the monitored voltage of at least one cell 1A of the battery pack 1 is below a first cell voltage threshold or is above a second cell voltage threshold higher than the first cell voltage threshold.

The first cell voltage threshold represents a lower voltage limit indicative of an undervoltage condition internal to any cell 1A of the battery pack 1, and the second output voltage threshold represents an upper voltage limit indicative of an overvoltage condition internal to any cell 1A of the battery pack 1.

In one possible embodiment, the protection system 100 according to the present invention further comprises at least one switch which can be caused to switch between a closed position where the battery pack 1 is electrically connected along the power circuit 102 and an open position where the battery pack 1 is electrically disconnected from the power circuit 102, and thus electrically isolated from the battery charger 3 and the one or more auxiliary loads 110.

In one possible example, the at least one switch comprises a first switch 4, for example a contactor, which is positioned along the power circuit 102 between the battery charger 3 and the battery pack 1 and which can be switched between a closed position where the battery pack 1 is electrically connected, along the power circuit 102, with the battery charger 3, and an open position where the battery pack 1 is electrically disconnected from the power circuit 102, and in particular from the battery charger 3.

In one possible embodiment, the first switch 4 is internal to or part of the battery pack 1.

In one possible embodiment, the at least one switch comprises a second switch 5, for example a contactor, which is positioned, along the power circuit 102, between the battery charger 3 and the at least one onboard load 110 and can be switched between a closed position where the load 110 is electrically connected to the battery charger 3 and the battery pack 1, and an open position where the battery charger 3 and the battery pack 1 are electrically disconnected from the load 110.

In a further possible embodiment, the protection system 100 according to the invention further comprises an electronic supervisor 20 which is configured to receive from the battery charger 3 and the control unit 11 first and second signals, S1 and S2 respectively, indicative of the monitored voltage at the output of the battery pack 1, and to monitor if the battery charger 3 and/or the control unit 11 are not operating correctly based on the first and second signals S1, S2 received.

In particular, the battery charger 3 and the control unit 11 are configured to provide periodically the electronic supervisor 20 with the respective first signals S1 and second signals S2.

In one possible embodiment, the electronic supervisor 20 is configured to output an alert signal SA indicative that at least one of the battery charger 3 and the control unit 11 may not operate correctly when the received first signals S1 and second signals S2 indicative of the voltage output monitored by the battery charger 3 and by the control unit 11 are inconsistent, or said otherwise not coherent, to each other.

Since the signals S1 and S2 should result at each measurement substantially equal to each other, the term "not coherent" or "inconsistent" has to be understood as meaning that the received first signals S1 and second signals S2 are not substantially equal to each other, i.e., there is a substantial difference between the voltage output monitored by the battery charger 3 and the same voltage output measured by the controller 11.

Hence, such substantial difference, e.g. a difference above a reference difference threshold, may be indicative that at least one of the battery charger 3 and the protection unit 10, in particular the controller 11 or sensor thereof, are not functioning properly, and the alarm signal SA may indicate to operators the need for maintenance or replacement interventions for any of them.

For example, if the vehicle is a train, the electronic supervisor 20 can be constituted by or part of the onboard Train Control Monitoring System (TCMS).

Hence, it is evident from the foregoing description that the protection system 100 according to the present invention allows achieving the intended aim since is capable of efficiently protecting batteries onboard public transportation vehicles with a simpler architecture compared with known solutions, while the highest safety standards are met and an acceptable level of hazard tolerable rate is anyhow achieved.

The protection system 100 has a very simple structure which allows to use it in principle onboard of any type of transportation vehicles using a battery pack, and in particular on board of railway vehicles, such as trains.

The protection system 100 thus conceived is susceptible of modifications and variations, all of which are within the scope of the inventive concept as defined in particular by the appended claims; for example, the power circuit 102 may be differently configured, and/or some of the previously described components can be positioned along the power circuit 102 in a different position, etc.

All the details may furthermore be replaced with technically equivalent elements.

## Claims

1. A protection system (100) for protecting at least one battery pack (1) which comprises one or more battery cells (1A) and is suitable to be mounted along a power circuit (102) onboard a vehicle, the protection system (100) comprising at least:
- a first protection unit which comprises or is constituted by a battery management system (2), BMS, which is part of or is associated to the battery pack (1), the BMS (2) being configured to monitor at least the voltage of each of the one or more battery cells (1A) and to cause the battery pack (1) to be disconnected if the voltage output of at least one cell exceeds at least one predefined cell voltage threshold defined for each of the one or more cells (1A);
- a second protection unit which comprises or is constituted by a battery charger (3) which is suitable to be connected to the battery pack (1) and charge said one or more battery cells (1A), wherein said battery charger (3) is configured to monitor the voltage at the output of the battery pack (1) and to disconnect at least the battery pack (1) if the monitored output voltage of the battery pack (1) exceeds at least one predefined output voltage threshold defined for the battery pack (1);
- a third protection unit which comprises at least a controller (11) and a sensor (12) which is adapted to provide the controller (11) with signals indicative of the voltage at the output of the battery pack (1), wherein the controller (11) is configured to disconnect the battery pack (1) from the battery charger (3) if the monitored output voltage of the battery pack (1) exceeds said at least one predefined output voltage threshold defined for the battery pack (1).

2. The protection system (100) according to claim 1, wherein said controller (11) is configured to disconnect the battery pack (1) from the power circuit (102) if the monitored voltage at the output of the battery pack (1) is below a first output voltage threshold defined for the battery pack (1) or is above a second output voltage threshold, defined for the battery pack (1), higher than said first output voltage threshold.

3. The protection system (100) according to claim 1 or 2, the BMS (2) is configured to disconnect the battery pack (1) from the power circuit (102) if the monitored voltage of at least one cell (1A) of the battery pack (1) is below a first cell voltage threshold or is above a second cell voltage threshold higher than said first cell voltage threshold.

4. The protection system (100) according to one or more of the preceding claims, further comprising at least one switch switchable between a closed position where the battery pack (1) is electrically connected along the power circuit (102) and an open position where the battery pack (1) is electrically disconnected from the power circuit (102).

5. The protection system (100) according to claim 4, wherein the at least one switch comprises a first switch (4) which is positioned along the power circuit (102) between the battery charger (3) and the battery pack (1) and which can be switched between a closed position where the battery pack (1) is electrically connected with the battery charger (3) and an open position where the battery pack (1) is electrically disconnected from the battery charger (3).

6. The protection system (100) according to one or more of claims 4-5, wherein the at least one switch comprises a second switch (5) which is positioned along the power circuit (102) between the battery charger (3) and at least one onboard load (110) and can be switched between a closed position where the load (110) is electrically connected to the battery charger (3) and the battery pack (1) and an open position where the battery charger (3) and the battery pack (1) are electrically disconnected from the onboard load (110).

7. The protection system (100) according to one or more of the previous claims, further comprising an electronic supervisor (20) which is configured to receive from the battery charger (3) and the controller (11) first and second signals (S1, S2), respectively, indicative of the monitored voltage output and to monitor if the battery charger (3) and/or the controller (11) are not operating correctly based on the first and second signals received.

8. The protection system (100) according to claim 7, wherein the battery charger (3) and the controller (11) are configured to provide periodically the electronic supervisor (20) with the respective first signals (S1) and second signals (S2).

9. The protection system (100) according to claim 7 or 8, wherein the electronic supervisor (20) is configured to output an alert signal (SA) indicative that at least one of the battery charger (3) and the controller (11) may be under a faulty condition when the received first signals and second signals indicative of the voltage output monitored by the battery charger (3) and the controller (11) are inconsistent to each other.

10. A vehicle comprising a protection system (100) according to one or more of the previous claims.

11. The vehicle according to claim 10, wherein the vehicle is a railway vehicle.
